# EUROPEAN PATENT SPECIFICATION

(11) **EP 0 296 839 B1**
(45) Date of publication and mention of the grant of the patent: **22.09.1993**
(21) Application number: 88305709.3
(22) Date of filing: 22.06.1988
(51) Int. Cl.: B21B 1/08, B23K 20/04

(54) **Multi-gauge bonding**
Verbinden von Bändern zu Flachprofilen mit mehreren Höhen
Soudage de bandes en sections à épaisseurs multiples

(30) Priority: 22.06.1987 US 64578
(43) Date of publication of application: 28.12.1988
(73) Proprietor: POLYMETALLURGICAL CORPORATION, North Attleboro, MA 02763 (US)
(72) Inventor: Iskenderian, Armenag, Westwood MA 02090 (US); Dair, Roderick Leslie, Hope Valley R.I. 02832 (US); Dion, Paul A., North Attleboro MA 02760 (US)
(74) Representative: Sanders, Peter Colin Christopher

(56) References cited:
- AT-B- 230 829
- AT-B- 372 310
- DE-A- 3 211 943

## Description

This invention relates generally to the production of multi-gauge metal strips, and is concerned in particular with a method of producing such strips with one or more relatively thin web segments having width to thickness ratios greater than 50 to 1.

Multi-gauge strips have been produced by a number of known methods, including for example continuous casting, continuous hot forging, continuous rolling, milling or machining, welding and extrusion.

A continuously cast product has a relatively rough surface and a low strength "as cast" crystal structure. Moreover, only one alloy can be continuously cast at a time, and then only at relatively slow speeds in the range of 20 to 152 cms per minute.

Continuous forging is also characterised by relatively low production speeds as well as poor accuracy, and the resulting products have relatively rough surfaces, making it necessary to resort to further machining in order to achieve desired surface finishes and tolerances.

Continuous rolling requires multiple roll passes, each having specially machined rolls. Intermediate annealing is usually required, and the resulting product is often plagued by non-uniform stresses which in turn result in distortion, e.g., twist and camber.

Milling or machining entails the cutting away or removal of metal, thereby producing considerable scrap. Production speeds are again relatively low, usually in the range of 1.2 to 2.5 metres per minute, this being due in large part to the necessity of avoiding excessive heat build up in the product as well as the cutters. The resulting product surface is also frequently mared by cutter striations.

Welding requires a high energy source to melt the metal and thereby cause fusion. Thickness variations are produced at the weld site, and the weld area is characterised by a relatively low strength as cast crystal structure. Moreover, the welds are subject to imperfections such as blow-holes and insufficient penetration. Welding rates rarely exceed 6.1 metres per minute, and insoluble materials such as silver and nickel cannot be bonded by this technique.

Extrusion is limited to one metal or alloy at a time, and then only to those metals which have a low recrystalization temperature and a low modulus of elasticity, e.g., copper, silver and aluminium alloys. Metals which gaul e.g., nickel and the platinum group metals cannot be extruded.

Many of the foregoing difficulties are exacerbated as the width to thickness ratios of the thinnest sections of the desired end products increase. When this ratio exceeds about 50 to 1, it becomes virtually impossible to successfully produce an acceptable product on a commercial scale with any of the above-described conventional methods.

The production of composite strips by means of solid phase bonding is also known. However, difficulties stemming from differential rolling stresses and resulting curvature distortion have prevented this method from being employed successfully in the production of multi-gauge products with width to thickness ratios exceeding about 50 to 1.

A general objective of the present invention is to provide an improved method of producing a multi-gauge metal strip which avoids the above-described shortcomings and problems of the prior art
AT-B-373 210 describes a method of continuously producing a multi gauge metal strip from at least two metal strips having different thicknesses comprising:
i. heating the metal strips to a solid phase bonding temperature;
ii. guiding the strips into a roll pass defined by a pair of work rolls, with the adjacent edges of said strips being arranged in a mutually overlapping relationship;
iii. rolling the strips in the roll pass to effect solid-phase bonding of the overlapping portions along respective bond interfaces while simultaneously reducing the thickness of the strip; and
iv. subjecting the composite strip exiting the roll pass to tensile stresses.

In the accompanying drawings, by way of example only:
Figure 1 is a diagrammatic illustration of an apparatus for practising the method of the present invention;
Figures 2, 3 and 4 are enlarged sectional views taken respectively along lines 2-2, 3-3 and 4-4 of Figure 1;
Figure 5 is an enlarged view of a portion of Figure 4 showing the bond interface between adjacent strips; and
Figures 6 and 7 are sectional views showing other typical multi-gauge composite strips of the type which can be produced with the method of the present invention.

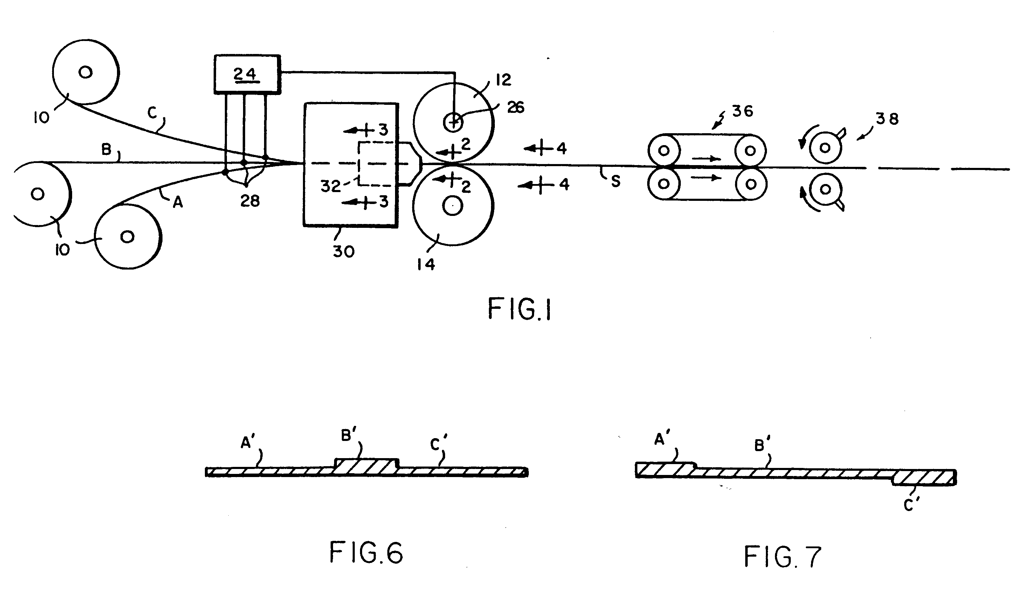

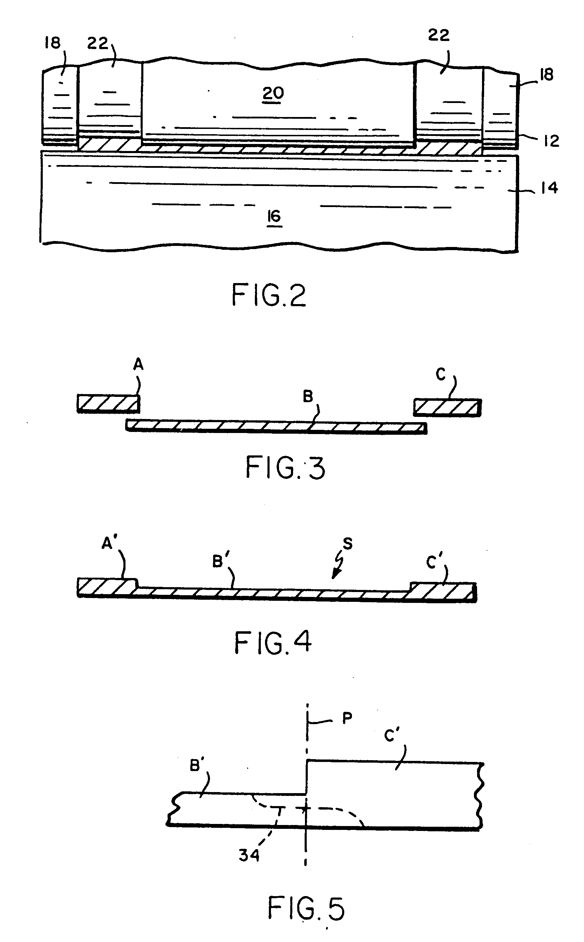

Referring initially to Figure 1, a plurality of individual metal strips A, B and C are unwound from storage reels 10 and are directed towards a single roll pass defined by a pair of work rolls 12, 14. The strips can comprise the same or different metal or alloys. High modulus metals such as steels can be employed, as can metals that gaul or metals that have high recrystalisation temperatures. As can be best seen in Figure 2, the lower roll 14 has a cylindrical surface 16, whereas the upper roll 12 has end collars 18 separated from a central barrel section 20 by grooves 22.

The individual strips A, B and C are initially heated to a solid phase bonding temperature by means of an electrical power source 24 connected as at 26 to one of the work rolls, and as at 28 by sliding or rolling contacts to each of the strips. The thus heated strips then enter a chamber 30 containing an oxide reducing atmosphere, e.g., hydrogen. A guide 32 then directs the strips from the chamber 30 into the roll pass. As shown in Figure 3, the entering strips A, B and C are in parallel alignment, with their adjacent edges arranged in an overlapping relationship. In this particular embodiment the centre strip B is thinner and wider than the two outboard strips A, C.

The thus aligned strips are rolled in the roll pass to effect a solid phase bonding of their overlapping edges while simultaneously reducing the thicknesses of the strips. The thus rolled strips exit from the roll pass as a composite multi-gauge strip S having a stepped cross section with three segments A', B' and C'. The centre segment or web B' is thinner than the two outboard segments A', C' and has a width to thickness ratio greater than 50 to 1. The bond interface between segments B' and C' is indicated in dotted at 34 in figure 5. This interface extends laterally from both sides of a reference plane P containing the step, and provides a continuous secure joint between the segments. A similar but mirror image bond interface is created between segments A′ and B′. The entire cross section has a wrought or cold work crystal structure which provides good strength and ductility.

A traction device 36 is employed to pull the composite strip S exiting from the roll pass. The pulling force subjects the composite strip to tensile stresses which exceed the yield strength of its materials at the time and elevated temperature condition at which they exit from the roll pass.

Because strips A, B and C of different cross sections are being bonded together to produce the desired end shape, non-uniform internal stresses are minimised and subsequently negated by the imposition of higher substantially uniform tensile stresses created by the pulling action of the traction device 36. Therefore, greater percentage thickness reductions may be effected at the areas of strip overlap in order to enhance solid phase bonding, without causing twist, camber or other like distortions.

After being subjected to tensile stresses by the traction device 36, the composite strip may be sub-divided by a flying shear 38 or the like into discrete lengths. Alternatively, the composite strip may be accumulated in coil form on a take up reel (not shown).

The following example illustrates the invention: three copper strips A, B and C were processed in accordance with the foregoing description. Each of the strips A, C had a width of 41.27mm and a thickness of 5.08mm. The centre strip B had a width of 52.9mm and a thickness of 1.04mm. The strips were resistance heated to a temperature above 538°C and were then directed through a hydrogen atmosphere in chamber 30 before entering the roll pass in the condition illustrated in Figure 3. During rolling, the strips were each reduced in thickness by between 30-50%, with the areas of edge overlap experiencing a larger percentage reduction in thickness of about 69%. Solid phase bonding was achieved at the areas of overlap. The cross-sectional configuration of the resulting composite strip S was as shown in Figure 4. Segments A′ and C′ had widths of 38.1mm and thickness of 3.200mm, and the central web segment B′ had a width of 50.8mm and a thickness of 0.66mm, making its width to thickness ratio 76.923.

The exiting composite strip was subjected to tensile stresses on the order of 1379.105N/m² before being sub-divided into discrete lengths by a shear. The resulting composite strip lengths laid flat without twist, camber or other like distortions in any of the segments A′, B′ and C′.

The method of the present invention is not limited to the production of the composite strip shown in Figure 4. Other and varied cross-sectional configurations are possible. Thus, as shown in Figure 6, the central web segment B′ may be thicker than the side segments A′, C′. Alternatively, as shown in Figure 7, the side segments A′, C′ may protrude from opposite faces of the composite strip. These are but a few of the variations which are possible by solid phase bonding two or more metal strips in accordance with the present invention.

The described system is capable of continuous operation at production rates as high as 12.19 metres per minute and perhaps higher. Bonding is effected and a finished shape is produced in a single roll pass, without resorting to additional process steps such as annealing, grinding, polishing, etc. The resulting surface finish is that of ground tool steel rolls, i.e. 508.10⁻⁶mm RMS or less. The bonded product has a wrought or cold work crystal structure which provides a good strength and ductility without internal discontinuities and imperfections of the type which characterise welded products. As compared with conventional milling or machining methods, scrap is minimal, making it possible to achieve acceptable product yields of 90% or better. The described system can produce strips with web segments having width to thickness ratios of greater than 50 to 1, with extreme accuracy in shape location and reproducibility.

## Claims

1. A method of continuously producing a multi gauge metal strip (5) from at least two metal strips (A,B,C) having different thicknesses comprising:
i. heating the metal strips (A,B,C) to a solid phase bonding temperature;
ii. guiding the strips into a roll pass defined by a pair of work rolls, with the adjacent edges of said strips (A,B,C) being arranged in a mutually overlapping relationship;
iii. rolling the strips in the roll pass to effect solid-phase bonding of the overlapping portions along respective bond interfaces (34) extending across a reference plane (P) perpendicular to the planes of the strips while simultaneously reducing the thickness of the strip; and
iv. subjecting the composite strip exiting the roll pass to tensile stresses; characterised in that
v. the heated strips are passed through an oxide reducing atmosphere prior to step ii, in that the thickness of the strips is reduced across their entire widths with a maximum percentage thickness reduction being effected in the roll pass at the area of overlap of the adjacent edges, the rolled strip exiting from the roll pass with a stepped cross-section having at least two segments (A',B',C') of different thicknesses located on opposite sides of the reference plane (P).

2. A method as claimed in claim 1 wherein the width of thickness ratio of at least one of the segments (A',B',C') is greater than 50 to 1.

3. A method as claimed in claim 1 or claim 2 wherein the composite strip is rolled with one flat surface (16) and one stepped surface (18, 20, 22).

4. A method as claimed in any one of the preceding claims further comprising:
vi. sub-dividing the composite strip into discrete flat lengths.

5. A method as claimed in any one of the preceding claims wherein the tensile stresses exceed the yield strength of the composite strip material at the time and in the condition at which the strip exit from the roll pass.

6. A method as claimed in any one of the preceding claims wherein the tensile stresses are exerted by pulling the composite strip out of the roll pass.

## Patentansprüche

1. Eine Methode zum kontinuierlichen Produzieren eines Mehrfachstreifen-Metallbandes (5) aus mindestens zwei Metallbändern (A, B, C) unterachiedlicher Dicke mit:
i. Erhitzen der Metallbänder (A, D, C) auf eine Fest-Phasen-Verbindungstemperatur;
ii. Führen der Bänder in einen Walzenspalt bestehend aus einem Paar von Arbeitswalzen, mit den angrenzend liegenden Kanten der genannten Bänder (A, B, C) in gegenseitig überlappender Weise angeordnet;
iii. Walzen der Bänder in den Walzenspalt um die Fest-Phasen-Verbindung der überlappenden Anteile zu erzeugen entlang der jeweiligen Verbindungsschnittstellen (34), welche sich über eine Referenzebene (P) senkrecht zur Ebene der Bänder erstreckt, während gleichzeitig die Dicke des Bandes reduziert wird; und
iv. Aufbringen von Zugkräften auf das zusammengesetzte Band, welches aus dem Walzenspalt herauskommt;
gekennzeichnet dadurch, daß:
v. die erhitzten Bänder werden durch eine oxidreduzierende Atmosphäre vor dem Schritt (2) hindurchgeführt, derart, daß die Dicke der Bänder über die gesamte Breite reduziert wird mit einem maximalen Prozentanteil, die Dickenreduktion, welche im Durchgang durch den Walzenspalt erzeugt wird im Gebiet der Überlappung der gegenüberliegenden Kanten, die gewalzten Bänder, welche den Walzenspalt verlassen, mit einem gestuften Querschnitt mit mindestens zwei Segmanten (A', B', C') unterschiedlicher Dicke angeordnet auf gegenüberliegenden Seiten der Referenzebene (P).

2. Ein verfahren gemäß Anspruch 1, dadurch gekennzeichnet, daß das Breitan-Dicken-Verhältnis von mindestens einem der Segmente (A', B', C') größer als 50 : 1 ist.

3. Verfahren gemäß Anspruch 1 oder 2, dadurch gekennzeichnet, daß das zusammengesetzte Band mit einer ebenen Oberfläche (16) und einer gestuften Oberfläche (18, 20, 22) gewalzt ist.

4. Ein Verfahren gemäß einem der vorhergehenden Ansprüche. dadurch gekennzeichnet, daß folgender weiterer Schritt vorgesehen ist:
vi. Unterteilung des zusammengesetzten Bandes in diskrete flache Längen.

5. Verfahren gemäß einem der vorhergehenden Ansprüche, dadurch gekennzeichnet, daß der Längszug den Kraftgrenzwert des zusammengesetztan Bandmaterials übersteigt zur Zeit und zu den Bedingungen, in welchen das Band den Walzenspalt verläßt.

6. Ein Verfahren gemäß einem der vorhergehenden Ansprüche, dadurch gekennzeichnet, daß die Zugstärken durch Herausziehen des zusammengesetzten Bandes aus dem Walzenspalt ausgeübt werden.

## Revendications

1. Procédé pour produire en continu une bande métallique d'épaisseur multiple (5) à partir d'au moins deux bandes de métal (A,B,C) ayant des épaisseurs différentes, consistant à :
I - Chauffer les bandes de métal (A,B,C) jusqu'à la température de liaison en phase solide ;
II - Guider les bandes dans un passage de rouleaux délimité par une paire de rouleaux de travail, les bords adjacents desdites bandes (A,B,C) étant disposés selon une position de recouvrement mutuel ;
III - laminer les bandes dans le passage de rouleaux pour réaliser la liaison en phase solide des portions se recouvrant le long d'interfaces de liaison respectives (34) s'étendant transversalement à un plan de référence (P) perpendiculaire aux plans des bandes tout en réduisant simultanément l'épaisseur de la bande et,
IV - soumettre la bande composite sortant du passage de rouleaux à des contraintes de tension, caractérisé en ce que,
V - les bandes chauffées sont soumises à une atmosphère réductrice d'oxyde avant l'étape ii, en ce que l'épaisseur des bandes est réduite sur toute leur largeur avec un pourcentage maximal de réduction d'épaisseur effectué dans le passage à rouleaux, dans la zone de recouvrement des bords adjacents, la bande laminée sortant du passage de rouleaux avec une section droite en échelons présentant au moins deux segments (A',B',C') d'épaisseurs différentes situés sur des bords opposés du plan de référence (P).

2. Procédé selon la revendication 1 selon lequel la valeur du rapport d'épaisseur de l'un au moins des segments (A',B',C') est supérieure à 50 sur 1.

3. Procédé selon la revendication 1 ou 2 dans lequel la bande composite est laminée avec une surface plate (16) et une surface à échelons (18, 20, 22).

4. Procédé selon l'une quelconque des revendications précédentes comprenant en outre une subdivision de la bande composite en longueurs plates discrètes.

5. Procédé selon l'une quelconque des revendications précédentes dans lequel les contraintes de tension excédent la limite élastique du matériau en bande composite à l'instant et à l'état selon lequel la bande sort du passage de rouleaux.

6. Procédé selon l'une quelconque des revendications précédentes dans lequel les contraintes de tension sont exercées en exerçant une traction sur la bande composite pour l'extraire du passage de rouleaux.
